(19) Europäisches Patentamt
European Patent Office
Office européen des brevets

(11) **EP 3 444 601 A1**

(12) **EUROPEAN PATENT APPLICATION**

(43) Date of publication:
**20.02.2019 Bulletin 2019/08**

(51) Int Cl.:
***G01N 27/327*** (2006.01)

(21) Application number: **17205790.3**

(22) Date of filing: **07.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **16.08.2017 US 201715678121**

(71) Applicant: **Tyson Bioresearch, Inc.**
**Miaoli Hsien 35053 (TW)**

(72) Inventors:
• **Chen, Wen-Huang**
 **251 New Taipei City (TW)**
• **Lee, Cheng-Che**
 **302 Hsinchu County (TW)**

(74) Representative: **Becker Kurig Straus**
 **Patentanwälte**
 **Bavariastrasse 7**
 **80336 München (DE)**

(54) **METHOD OF OPERATION OF A METER TO MEASURE A RESPONSE OF A SAMPLE ON A REACTION CHAMBER OF A TEST STRIP**

(57) The method of operation of a meter includes placing a sample on a test strip, assigning a first electrode of the test strip to be a counter electrode, applying a first signal to the test strip during a first period of time, assigning a second electrode of the test strip to be the counter electrode, applying a second signal to the test strip to measure the concentration of an analyte in the sample.

FIG. 1

**EP 3 444 601 A1**

**Description**

Field of the Invention

The present invention relates to a method of constructing a universal test strip structure and operation thereof, and more particularly, a method of constructing a universal test strip structure made compatible with various electrochemical detections by using an identification mechanism and operation thereof.

Background of the Invention

Electrochemical biosensors are used to determine the concentration of various analytes from samples. The analytes may include glucose, uric acid and cholesterol of biological fluids. When testing samples, the test strip may be inserted into a meter, and the sample may be a liquid dropped in the reaction chamber of the test strip to determine the concentration of the analyte in the sample.

According to the development trend in the biosensor market, the demand for multifunctional biosensor is increasing. In other words, the demand of various detection tests including glucose, uric acid and/or cholesterol combined in one meter is increasing. In order to develop a multifunctional biosensor, there are several technical problems that need to be addressed. The technical problems include developing a universal test strip having a structure that can fit to one meter having different settings for measuring different analytes, identifying a specific type of analyte to be tested before performing a test, developing a universal test strip that does not exceed an ideal tolerance for various detecting voltages or detecting currents for different analytes, and developing a structure of a universal test strip having a small reaction chamber that can still generate an accurate result even when the detecting voltages or detecting currents exceed the ideal tolerance.

By developing a universal test strip, manufacturing cost may be reduced. Possible reasons to exceed the ideal tolerance of electrode include the high concentration of the analyte, insufficient sample volume to be able to cover desired area of the electrodes in the reaction chamber, the counter electrode is reduced to be as small as possible causing the reaction area to be reduced, combination of positive and negative voltages between the working electrode and the reference electrode, or burn-off caused by electrochemical procedure. Exceeding the ideal tolerance of an electrode (usually happened on the counter electrode) may damage the effective reaction area for following steps. The damages include the electrode surface being denatured, sediment on the reaction area, sample electrolysis, or reaction air bubbles over the electrode surface. If the effective reaction area is damaged, the following detection may have inaccurate result. Therefore, a universal test strip that can identify the type of test strip needed and to avoid damage in the electrodes that will influence following detections is needed to be developed.

In recent years, there are a growing number of diabetic patients. Glucose concentration monitoring is important in the everyday life for diabetic patents. Routine tests must be conducted at least 3-4 times every day. According to the concentration of blood glucose, the glucose concentration may be controlled using insulin. This will reduce the risk of medical complications such as vision loss and kidney failure. The accurate measurement of blood glucose concentration is needed.

In the past, meters may use test strips having a counter electrode but without a reference electrode. As compared to having both the counter electrode and the reference electrode, the stability and accuracy of the test tube are reduced when the reference electrode is not in use. Therefore, conventional meters may use test strips having separate reference electrode and counter electrode. The electrodes are layers of conductive material formed on a substrate of the test strip. When a sample is introduced to a test strip, a chemical reaction is performed on the reaction chamber of the test strip. The reaction chamber exposes parts of the three electrodes to the sample. The current across the working electrode and the counter electrode is determined according to the concentration of the analyte. The additional electrode needed to be placed within the reaction chamber of the test strip causes the increase in the area of the reaction chamber. The objective is to accurately measure the concentration of an analyte from a small sample.

The increase in the area of the reaction chamber due to the addition of an electrode would require the volume of the sample to increase. Thus, there is a need to develop a technology wherein only a small sample is needed to accurately measure the concentration of the analyte of the sample. When the voltage or current density across the working electrode and the counter electrode is too high, the characteristics or situation of the counter electrode surface may be permanently or temporarily changed. For example, when the current is too high, the surface area of the counter electrode may not be able to receive the instantaneous current and form an overcurrent. In some circumstances, a reading of the current on the second set of voltage applied may be required. This means that a second set of voltage need to be supplied to the test strip. Because the counter electrode may have been damaged during the supply of the first set of voltage supplied to the test strip, the accuracy of the reading may be uncertain due to unknown damage of the test strip during the first voltage applied. Thus, there is a need to develop a method of operation of a meter that would ensure an accurate readout of the current to measure the concentration of the analyte in the sample.

Summary of the Invention

An embodiment of the present invention presents a method of operation of a meter. The method comprises placing a sample on a reaction chamber of a test strip of the meter, assigning a first electrode of the test strip to be a counter electrode, applying a first signal to a working electrode of the test strip during a first period of time, assigning a second electrode of the test strip to be the counter electrode, applying a second signal to the working electrode of the test strip during a second period of time, and measuring a current across the working electrode and the second electrode to determine a concentration of an analyte of the sample during the second period of time. The method of operation of a meter can be controlled and performed by a microprocessor control unit (MCU) in the meter. The method is to ensure when the voltage applied to the test strip more than one time, an upcoming reading can use an undamaged electrode as a counter electrode for the accuracy of the reading. Therefore, the method may ensure the accuracy of an upcoming reading.

Another embodiment of the present invention presents a structure of a test strip. The test strip comprises a substrate, a working electrode formed on the substrate, a reference electrode formed on the substrate, and a counter electrode formed on the substrate. The working electrode has a plurality of resistor blocks. The plurality of resistor blocks are disposed separately from each other and only coupled to each other in series.

Brief Description of the Drawings

FIG.1 illustrates a flowchart of a method of operation of a meter according to an embodiment of the present invention.
FIG.2 illustrates a test strip according to an embodiment of the present invention.
FIG.3 illustrates a structure of the at least three electrodes of the test strip according to an embodiment of the present invention.
FIG.4 illustrates a structure of the at least three electrodes of the test strip according to another embodiment of the present invention.
FIG.5 illustrates a structure of the at least three electrodes of the test strip according to a further embodiment of the present invention.
FIG.6 illustrates a plurality of resistor blocks according to an embodiment of the present invention.
FIG.7 illustrates a plurality of resistor blocks according to another embodiment of the present invention.
FIG.8 illustrates a test strip according to another embodiment of the present invention.
FIG.9 illustrates another structure of the four electrodes of the test strip shown in FIG.8.
FIG. 10 illustrates an equivalent circuit of the plurality of resistor blocks in FIG.7.

Detailed Description

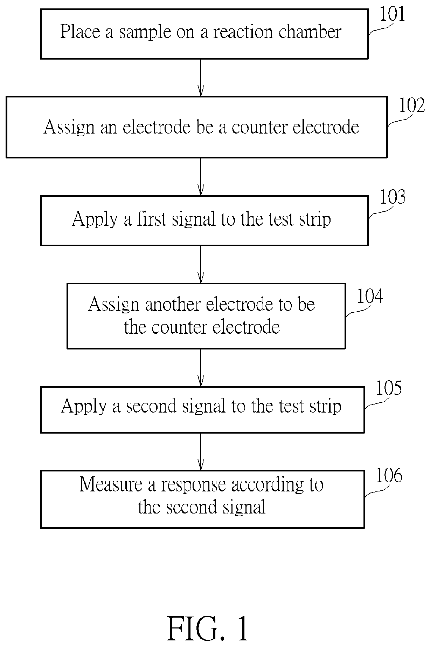

FIG.1 illustrates a flowchart of a method of operation of a meter according to an embodiment of the present invention. The method may include, but is not limited to, the following steps:

Step 101: place a sample on a reaction chamber of a test strip of the meter;
Step 102: assign a first electrode of the test strip to be a counter electrode;
Step 103: apply a first signal to a working electrode of the test strip during a first period of time;
Step 104: assign a second electrode of the test strip to be the counter electrode;
Step 105: apply a second signal to the working electrode of the test strip during a second period of time; and
Step 106: measure a response according to the second signal.

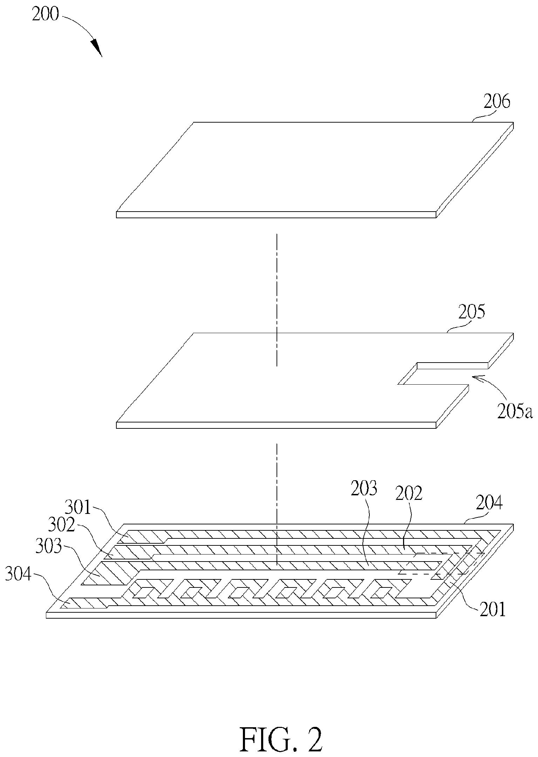

In step 101, the sample may be placed inside the reaction chamber of the test strip of the meter. FIG.2 illustrates a test strip 200 according to an embodiment of the present invention. The test strip may comprise at least three electrodes 201, 202, and 203. The at least three electrodes 201, 202, and 203 may be formed on at least one substrate 204. A spacing layer 205 may be disposed above the at least three electrodes to protect the at least three electrodes. A notch 205a may be formed on the spacing layer 205 to expose parts of the at least three electrodes 201, 202, and 203 to be used during testing. A cover layer 206 may be disposed above the spacing layer 205 to form a reaction chamber with the notch 205a of the spacing layer 205 and the substrate 204. Areas of the expose parts of the at least three electrodes 201, 202, and 203 may be substantially equal to each other. The reaction chamber may include a reagent layer (not shown on the FIG.2) used to perform chemical reaction with a sample.

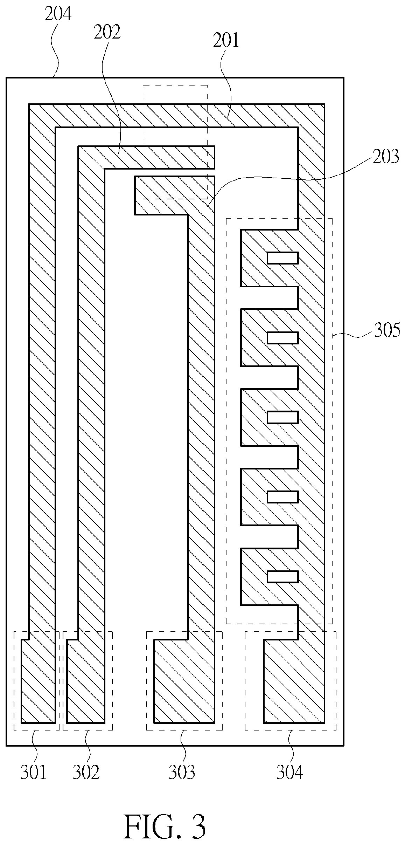

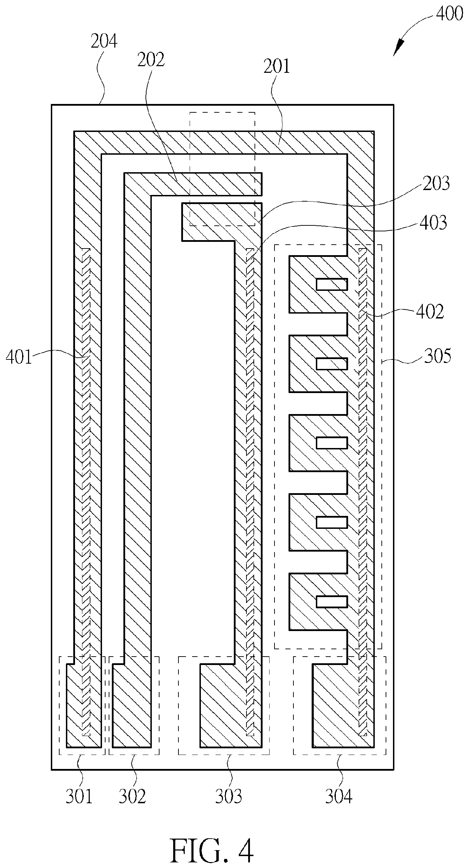

In step 102, a first electrode of the at least three electrodes 201, 202, and 203 of the test strip 200 shown in FIG.2 may be assigned to be the counter electrode. FIGs.3 and 4 are possible structures of the test strip having at least three electrodes.

FIG.3 illustrates a structure of the at least three electrodes of the test strip 200 according to an embodiment of the present invention. The at least three electrodes may be a working electrode 201, a reference electrode (first electrode) 202 and a counter electrode (second electrode) 203.

The counter electrode 203 (also called the auxiliary electrode) may be used to balance the current between the working electrode 201 and the counter electrode 203, or so define the reactions in which an electric current is expected to flow. The reference electrode 202 is an electrode, which has a stable and well-known electrode potential, which may be used to provide a stable voltage difference between the working electrode 201 and the reference electrode 202. The working electrode 201 is the electrode in the electrochemical system on which the reaction of interest is occurring. The embodiment may only be one working electrode 201 to reduce the reaction area needed. Some embodiments of a test strip may have more than one working electrode 201. For example, there may be two working electrodes 201.

Each of the working electrodes 201 may be covered with different enzyme (or one of the working electrodes 201 without covering enzyme) for different testing. When the working electrode 201 of a test strip is set to only be used for one type of testing, the test strip may be manufactured to only have one working electrode 201. In doing so, no need for additional working electrode 201 could reduce the area for the reaction chamber. The test strips are mainly designed to have the sample to mainly cover the working electrode 201. The coverage of the sample on the counter electrode 203 is relatively ignored. Thus, the working electrode 201 may be designed to be able to handle the voltage or current supplied and is not likely to be damaged during testing process.

The working electrode 201 may be coupled to two pads 301 and 304. A pad 302 may be coupled to the reference electrode 202. A pad 303 may be coupled to the counter electrode 203. The reference electrode 202 can be a counter electrode 203 during the first period of time, and it can be the reference electrode 202 during the second period of time. The pads 301, 302, 303, and 304 may be used to couple the test strip 200 to a readout circuit of the meter. Furthermore, the working electrode 201 may further comprise a plurality of resistor blocks 305 coupled to each other. The at least three electrodes 201, 202, and 203 and the pads 301, 302, 303, and 304 may be formed on the substrate 204 using a first conductive material. The first conductive material may be a carbon black. The at least three electrodes 201, 202, and 203 are not limited to being formed using carbon black. In some other embodiments, the at least three electrodes 201, 202, and 203 may be formed using other conductive materials.

FIG.4 illustrates a structure of the at least three electrodes 201, 202, and 203 of the test strip 400 according to another embodiment of the present invention. The at least three electrodes 201, 202, and 203 may be a working electrode 201, a first electrode 202 and a second electrode 203. The working electrode 201 may be coupled to two pads 301 and 304. A pad 302 may be coupled to the first electrode 202. A pad 303 may be coupled to the second electrode 203. The pads 301, 302, 303, and 304 may be used to couple the test strip 400 to a readout circuit. Furthermore, the working electrode 201 may further comprise a plurality of resistor blocks 305 coupled to each other. The at least three electrodes and the pads 301, 302, 303, and 304 may be formed on the substrate 204 using the first conductive material. The first conductive material may be carbon black.

Furthermore, a conductive layer of a second conductive material may be formed on the substrate 204 before forming the working electrode 201 and the second electrode 203. The second conductive material may have higher conductivity than the first conductive material. As shown in FIG.4, a conductive layer 401 of the second conductive material may be formed on an area of the substrate 204 where the pad 301 and a first part of the working electrode 201 are formed. A conductive layer 402 of the second conductive material may be formed on an area of the substrate 204 where the pad 304 and a second part of the working electrode 201 are formed. A conductive layer 403 of the second conductive material may be formed on an area of the substrate 204 where the pad 303 and the second electrode 203 are formed. The second conductive material may be silver. In some other embodiments, the conductive layer may be formed using other conductive materials such as gold and platinum. Since the second conductive material used to form the conductive layer has higher conductivity as compared to the first conductive material used to form the electrodes, the second conductive material usually applies silver as the second conductive material but such material may be more sensitive to oxidation. Thus, the first conductive material is formed above the silver material to prevent oxidation of the second conductive material. In some embodiments, different second conductive materials may be used to form the conductive layer on the substrate 204 and underneath any one or more than one of the pads 301, 302, 303, 304 and/or electrodes 201, 202, 203.

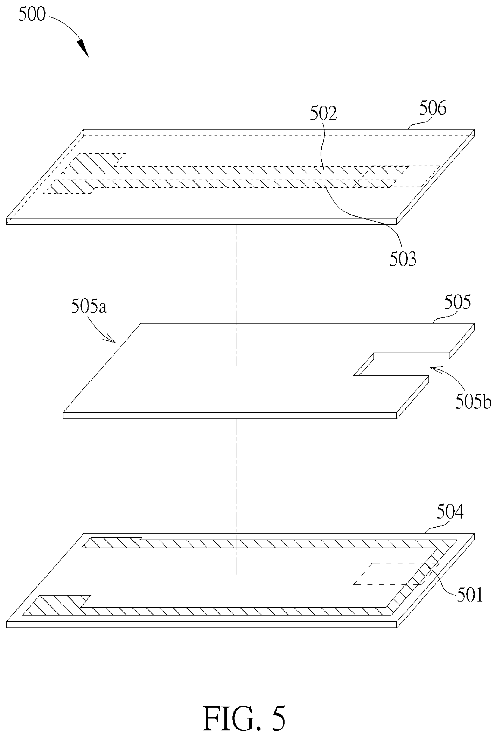

FIG.5 illustrates a structure of the at least three electrodes of the test strip 500 according to a further embodiment of the present invention. The at least three electrodes may be a working electrode 501, a reference electrode 502 and a counter electrode 503. The working electrode 501 may be formed on a first substrate 504 and the reference electrode 502 and counter electrode 503 may be formed on a third substrate 506. A spacing layer 505 may be disposed between the first substrate 504 and the third substrate 506. A notch 505b may be formed on the spacing layer 505 to expose parts of the at least three electrodes 501, 502, and 503 to be used during testing. When the at least three electrodes 501, 502, and 503 are equidistant from each other, the reading from the reference electrode 502 and the counter electrode 503 is expected to have the same accuracy when the function of the reference electrode 502 and the counter electrode 503 are interchanged.

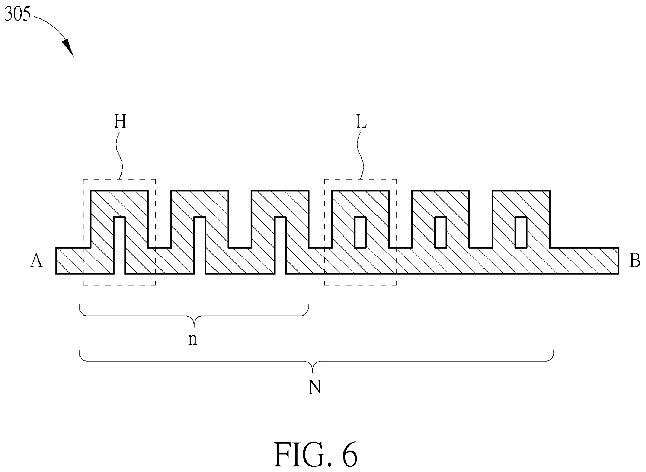

FIG.6 illustrates a plurality of resistor blocks 305 according to an embodiment of the present invention. The plurality of resistor blocks 305 may be coupled to each other to form a series of resistors. The plurality of resistor blocks 305 may comprise high resistance blocks H and low resistance blocks L. The total resistance of the plurality of resistor blocks 305 may be used to identify the status of the strip. The status of the strip may comprise, but not limited to, calibration information corresponding to lot-to-lot variation, expiration date, sales channel, designated market, detection mode, designated market language, and different detection samples. Such mechanism to identify the status of the strip can detect a uniform structure strip fits various analytes by one meter, and identify specific kind of test strip before performing a test.

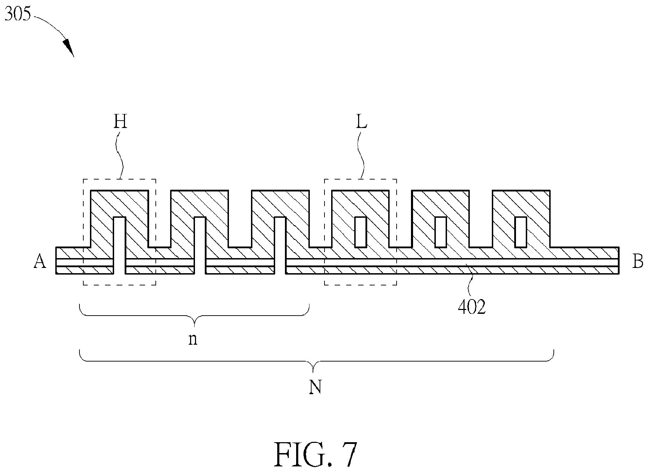

When a resistor block is formed on the substrate, the plurality of resistor blocks may initially all be low resistance blocks L. Each of the low resistance blocks L may have a quadrilateral shape. According to the needs of the meter, a number of the low resistance blocks L may be transformed to be high resistance blocks H. A low resistance blocks L may be transformed to be a high resistance block H by removing a part of one side of the low resistance blocks L as shown in FIGs.6 and 7. Also, as shown in FIGs.6 and 7, two resistor blocks may be coupled to each other through a conductive material formed between a corner of a resistor block and a corner of another resistor block. In other words, each of the resistor blocks may represent a resistor and the resistors being represented by each resistor block are coupled to each other in series.

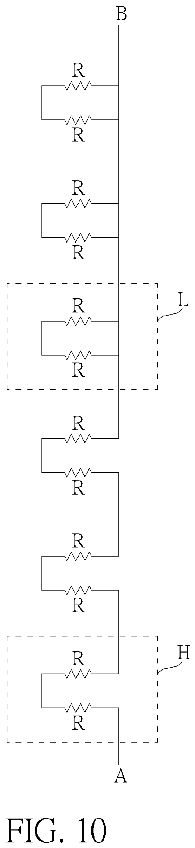

The resistance of a resistor block may be determined according to the distance of path traveled by the current through the resistor block. Since a part of the low resistance blocks L are removed to form the high resistance blocks H, the shortest path through the working electrode has been removed. The shortest path may be removed using a laser ablation process wherein the conductive layer the low resistance block L forming the shortest path may be partially of fully removed. FIG. 10 illustrates an equivalent circuit of the plurality of resistor blocks in FIG.7. Two sides of a low resistance block L may be considered as resistors R and the other two sides of the low resistance block may be considered as connecting wires connecting the two resistors R of the low resistance block.

Initially, the two resistors R are coupled in parallel. According to the need of the meter, the low resistance block L may be converted to be a high resistance block H. A part of one of the connecting wires connecting the two resistors R in parallel may be removed using laser ablation process. The two resistors R may then be connected in series as shown in FIG. 10. The current flowing through the working electrode needs to flow through the remaining three sides of the high resistance blocks H. Thus, the high resistance block H will have a higher resistance as compared to the low resistance block L. To further eliminate the resistance caused by low resistance block L, a conductive layer 402 shown in FIG.4 may be used to increase the conductivity of the working electrode. The low resistance block L may have a resistance almost equal to zero. Thus, during calculation, the resistance of the low resistance block L may be considered as 0 ohm. The total resistance of the plurality of resistor blocks may be determined according to the following equation:

$$RAB=(n)RH+[(N-n)RL] \tag{1}$$

where:

RAB is the total resistance of the plurality of resistor blocks;
n is the number of the high resistance blocks;
RH is the resistance of one high resistance block;
N is the total number of the plurality of resistor blocks; and
RL is the resistance of one low resistance block.

FIG.7 illustrates a plurality of resistor blocks 305 according to another embodiment of the present invention. The plurality of resistor blocks 305 in FIG.7 further comprises a conductive layer 402. The addition of the conductive layer 402 may be used to further reduce the effect of the resistance of the low resistance blocks L. By further reducing the effect of the resistance of the low resistance blocks L, the difference between the resistance of one low resistance block L and the resistance of one high resistance block H may be increased.

The plurality of resistor blocks may not be limited to being disposed on the working electrode. The plurality of resistor blocks may be disposed in any conductive path that forms a loop to the meter. However, for the present invention, only the conductive path of the working electrode forms a loop to the meter. The main reason for having the plurality of resistor blocks be formed on the working electrode is that the working electrode has two ends coupled to the meter to form the loop while other electrodes only have one end coupled to the meter. To reduce the number of connections between the test strip and the meter, the use of available electrodes may be optimized by being used for more than one purpose. An electrode such as the working electrode may have a dual purpose since the resistance of the resistor blocks does not affect the output of the testing because the current flowing through the working electrode is close to zero. The reason for the working electrode to be the only electrode in test strip to have two ends coupled to the meter is that, in coordination with the sensing circuit of the meter, the current and bias voltage supplied to the test strip are separate from each other to reduce the resistance of the silver layer. Thus, the bias voltages required during testing may be stabilized.

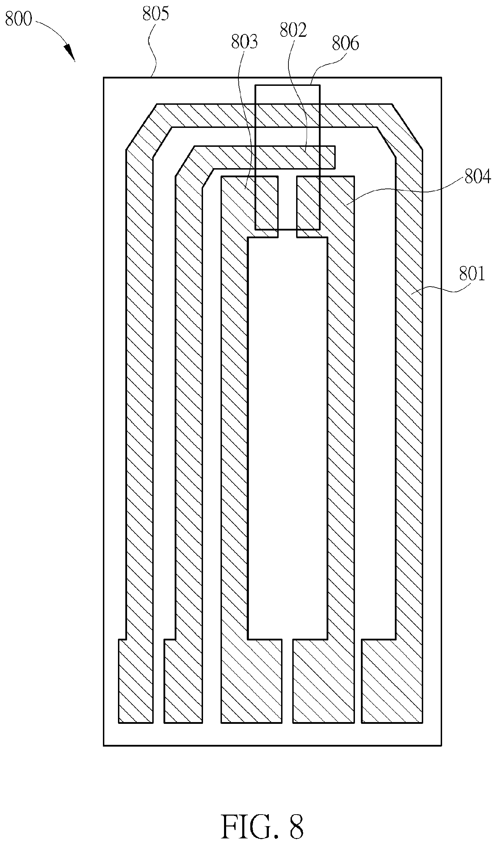

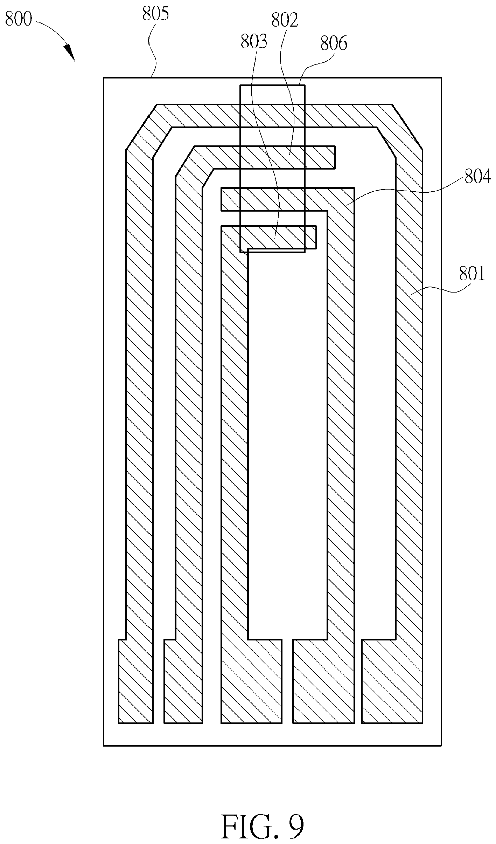

FIGs.8 and 9 are possible substrate structures of test strip having four electrodes. FIG.8 illustrates a test strip 800 according to another embodiment of the present invention. In another embodiment of the present invention, the test strip 800 may comprise four electrodes. The four electrodes may be a working electrode 801, a reference electrode 802, a first counter electrode 803, and a second counter electrode 804. The four electrodes may be formed on a substrate 805. The four electrodes may be formed on the substrate using the first conductive material. The first conductive material may be carbon black.

In the same way as the test strip 200 shown in FIG.2, the test strip 800 may further comprise an spacing layer disposed above the at least three electrodes to protect the four electrodes. A notch may be formed on the spacing layer to expose parts of the four electrodes to be used during testing. A cover layer may be disposed above the spacing layer to form a reaction chamber with the notch of the spacing layer and the substrate. The reaction chamber may include a reagent used to perform chemical reaction with a sample. In some embodiments, the layout of the four electrodes may be different from the structure of the four electrodes of the test strip 800 shown in FIG.8. FIG.9 illustrates another structure of the four electrodes of the test strip 800 shown in FIG.8. The working area of the second counter electrode 804 may be greater than or equal to the working area of the first counter electrode 803 if the conductive material is the same. Furthermore, the working area of the second counter electrode 804 may be greater than the working area of the working electrode 801. The working area of the electrodes according embodiments in FIGs.8 and 9 may be the areas of the electrode exposed to the sample through the notch of the spacing layer and may be illustrated in FIGs.8 and 9 as the reaction area 806.

In some embodiments of the present invention, the working electrode 801 of the test strips 800 in FIGs.8 and 9 may further comprise a plurality of resistor blocks coupled to each other similar to the test strip 200 shown in FIG.2. Furthermore, in some other embodiments of the present inventions, the first part of the working electrode 801, the second part of the working electrode 801, the first counter electrode 803, and the second counter electrode 804 of the test strips 800 in FIGs.8 and 9. The conductive layer may be formed using a second conductive material. The second conductive material may have conductivity higher than the conductivity of the first conductive material.

The first counter electrode 803 is damaged during the first period time. The damage in the first counter electrode 803 may be caused by insufficient size of the reaction area but still plays the role of a counter electrode during the first period of time. While the area of the first counter electrode 803 may be limited in the reaction chamber, the second counter electrode 804 may have an area that is sufficient for accurate measurement. Since different electrodes be the counter electrodes at different periods of time, the first counter electrode 803 and the second counter electrode 804 may have separate paths for connecting to the meter. As the voltage levels applied, conductivity of each counter electrode, or the reacted analyte during two periods of time may be varied, the area of the second counter electrode 804 may or may not be larger than the first counter electrode.

In step 103 (FIG.1), a first signal may be applied to the working electrode of the test strip during a first period of time. The first signal may be a negative signal applied to the working electrode of the test strip. During the first period of time, a chemical reaction between the analyte and the reagent make take place. A plurality of electrons may be transferred to the working electrode through diffusion effect. A first current may or may not be measured during the first period of time. The first current may be the current across the working electrode and the counter electrode. The first current may be used to determine an initial concentration of the analyte in the sample. Also, the reference electrode may be used to measure the potential of the working electrode according to the current flowing across the working electrode and the counter electrode.

Due to the concentration of the analyte in the sample, the current density flowing across the working electrode and the counter electrode may be too high. Under the above-mentioned circumstance, the characteristics of the counter electrode may temporarily or permanently change. Thus, in step 104, the second electrode of the at least three electrodes may be assigned to be the counter electrode.

Since the reference electrode may be used to provide a fixed potential difference between the working electrode and the reference electrode, there is little or no current flowing through the reference electrode during the first period of time. The reference electrode may not be damaged due to high current density. Therefore, for the proceeding steps of the method, the electrode originally assigned to be the reference electrode may be assigned to be the new counter electrode. And, the electrode originally assigned to be the counter electrode may be assigned to be the new reference electrode. In some other embodiments, for the test strip having four electrodes, the second counter electrode may be used as the counter electrode in the proceeding steps after step 103. The step 103 may be performed regardless of the state of the original counter electrode to ensure that the meter will work properly and be able to accurately determine the concentration of the analyte in the sample when measured after applied the second signal.

When using the test strip shown in FIGs.3, 4, and 5, the reference electrode specified in the test strips shown in FIGs.3, 4, and 5 may be assigned to be the counter electrode of the test strip for the proceeding steps. The counter electrode specified in the test strips shown in FIGs.3, 4, and 5 may be assigned to be the reference electrode of the test strip for the proceeding steps. When using the test strip shown in FIGs.8 and 9, if the first counter electrode of the test strip shown in FIGs.8 and 9 is used in step 102, the second counter electrode of the test strip shown in FIGs.8 and 9 may be assigned to be the counter electrode of the test strip.

In some embodiments of the present invention, the internal circuit of the meter may comprise of at least one switch used to interchange the connection of the internal circuit to the at least three electrodes of the test strip, wherein the at least one switch may be a solid switch or switch controlled by a microcontroller. The at least one switch may be used to switch the reference electrode used in the first time period to be the counter electrode used in the second time period and switch the counter electrode used in the first time period to be the reference electrode used in the second time period. In some other embodiment, the at least one switch may be used to switch the another counter electrode in the first time period to be the counter electrode used in the second time period.

In step 105, a second signal may be applied to the working electrode of the test strip during the second period of time. The second signal may be a positive signal applied to the working electrode of the test strip. In step 106, a second current may be measured between the working electrode and the current counter electrode to indicate the concentration of the analyte in the sample. In some embodiments, the concentration of the analyte in the sample may be determined by calculating a diffusion factor according to the second current. The diffusion factor is, in turn, used to correct the initial reading of the concentration generated according to the first current.

Furthermore, to ensure that the reading of the second electrode is correct, the area of the counter electrode in the reaction chamber must be greater than the area of the working electrode in the reaction chamber when other conditions are the same. If the area of the counter electrode in the reaction chamber is less than the area of the working electrode in the reaction chamber, the conductivity of the counter electrode must be better than the conductivity of the working electrode when other conditions are the same. The second counter electrode may be set to be in closer proximity to the sampling port as compared to the first counter electrode to ensure that the area of the second counter electrode covered by the sample is sufficient.

The signal applied during the first period of time and the second period of time may be a fixed voltage or a fixed current. The signal applied during the first period of time and the second period of time may also be a combination of multiple voltage or current. The voltage or the current may have positive value or negative value.

The signal applied during the first period of time and the second period of time may consist of positive voltage pulses, negative voltage pulses, zero voltage bias or a combination thereof. During the first period of time, the first counter electrode may be used for defined the reactions in which an electric current is expected to flow. And, during the second period of time, the second counter electrode may be used for defining the reactions in which an electric current is expected to flow. At least one measurement may be done after at least one pulse of the second signal applies during the second period of time.

The present invention presents a method of operation of a meter. To provide the meter with a properly working test strip for the duration of testing a sample, a first electrode of the test strip may initially be assigned to be a counter electrode and a second electrode may be assigned to be a counter electrode during later part of the duration of testing. Thus, the meter will be able to make sure that during later part of the duration of the testing operation is accurate. Furthermore, to let the meter enable identify the test strip, a plurality of resistor blocks may be formed on the working electrode. The plurality of resistor blocks may be coupled in series to each other. The total resistance of the plurality of resistor blocks may be identify the test strip before/after performing a test.

Another embodiment provides a method of utilizing a test strip to detect a diffusion factor of an intermediator in a sample, wherein the test strip includes a reaction region, and the reaction region includes a working electrode, a reference electrode, and a counter electrode. The method includes placing the sample in the reaction region; applying an first DC electrical signal to the working electrode during a first period; the mediator receiving electrons from or releasing electrons to the working electrode to generate an intermediator according to the first DC electrical signal; measuring a first current through the working electrode during the second period, wherein a polarity of the second DC electrical signal during the second period is inverse to the first DC electrical signal during the first period; and calculating the diffusion factor of the intermediator in the sample according to the first current. Wherein when applying a first DC electrical signal to the working electrode during a first period is applying the first electrode to be the counter electrode, the first counter electrode may be damaged during the first period time. When measuring the first current through the working electrode during the second period is applying the second electrode to be the counter electrode. Therefore, the current measurement may not be influenced by the damage of the first electrode.

**Claims**

1.  A method of operation of a meter to measure a response of a sample on a reaction chamber of a test strip, the method **characterized by**:

    assigning a first electrode of the test strip to be a counter electrode;
    applying a first signal to a working electrode of the test strip during a first period of time;
    assigning a second electrode of the test strip to be the counter electrode;
    applying a second signal to the working electrode of the test strip during a second period of time; and
    measuring the response during the second period of time.

2.  The method of claim 1, wherein assigning the first electrode of the test strip to be the counter electrode and assigning the second electrode of the test strip to be the counter electrode is **characterized by** assigning the first and the second electrode using at least one switch of the meter.

3.  The method of claim 1, further **characterized by** assigning the first electrode of the test strip to be a reference electrode before applying the second signal to the working electrode of the test strip during the second period of time.

4.  The method of claim 1, further **characterized by** assigning the second electrode of the test strip to be a reference electrode before applying the first signal to the working electrode of the test strip during the first period of time.

5.  The method of any of claims 1-4, further **characterized in that** said the response is measuring a current across the working electrode and the second electrode.

6.  The method of claim 1, further **characterized in that** the test strip comprises at least four electrodes.

7.  The method of claim 6, further **characterized by** assigning a third electrode of the test strip to be the reference electrode during the first period and second period of time.

8.  The method of claim 1, further **characterized in that** the first signal is a negative voltage, and the second signal is a positive voltage.

9.  The method of claim 1, further comprising:

    forming an electrode of the test strip having a plurality of resistor blocks, the electrode having at least two electrode pads used to couple to the meter; and forming the electrodes of the test strip on a substrate using a first conductive material;
    wherein the resistor blocks each comprise a shortest path and a longest path electrical connection to the other resistor block to form a low resistance block.

10. The method of claim 9, further comprising removing the shortest path of the resistor block to form a high resistance block of the plurality of resistor blocks.

11. A test strip **characterized by**:

    a substrate;
    a working electrode formed on the substrate;
    a first electrode formed on the substrate; and
    a second electrode formed on the substrate;
    wherein an electrode of the test strip has a plurality of resistor blocks; the plurality of resistor blocks disposed separately from each other and only coupled to each other in series; the electrode has at least two electrode pads used to couple to the meter.

12. The test strip of claim 11, further **characterized in that** low resistor blocks of the plurality of resistor blocks have more conductive pathway to contact another resistor block than high resistor blocks of the plurality of resistor blocks.

13. The test strip of any of claims 11-12, further **characterized in that** each low resistor block of the plurality of resistor blocks has at least two conductive pathways to contact another resistor block and each high resistor block of the plurality of resistor blocks has one conductive pathway to contact another resistor block, wherein each resistor block has two contact points to electrically couple the plurality of resistor blocks to electrode pads of the test strip.

14. The test strip of any of claims 11-13, further **characterized in that** a high resistance block of the plurality of resistor blocks is formed by removing a notch from a low resistance block of the plurality of resistor blocks, a total resistance of the plurality of resistor blocks is determined according to following equation:

$$R_{AB}=(n)R_H+[(N-n)R_L]$$

where:

$R_{AB}$ is the total resistance of the plurality of resistor blocks;
n is a number of high resistance blocks of the plurality of resistor blocks;
$R_H$ is a resistance of one high resistance block;
N is a total number of the plurality of resistor blocks; and
$R_L$ is a resistance of one low resistance block.

15. The test strip of any of claims 11-14, wherein the first electrode is assigned to be a counter electrode and the second electrode is assigned to be a reference electrode when applying a first signal to the working electrode of the test strip during a first period of time, the first electrode is assigned to be a reference electrode and the second electrode is assigned to be a counter electrode before applying a second signal during the second period of time.

Place a sample on a reaction chamber — 101

Assign an electrode be a counter electrode — 102

Apply a first signal to the test strip — 103

Assign another electrode to be the counter electrode — 104

Apply a second signal to the test strip — 105

Measure a response according to the second signal — 106

FIG. 1

200

206

205

205a

301
302
303
304

203  202
204

201

FIG. 2

FIG. 3

FIG. 4

500

502    506

505a    505

505b

504

501

FIG. 5

FIG. 6

FIG. 7

FIG. 8

FIG. 9

FIG. 10

**EUROPEAN SEARCH REPORT**

Europäisches
Patentamt
European
Patent Office
Office européen
des brevets

Application Number

EP 17 20 5790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/083412 A1 (OAKVILLE HONG KONG CO LTD [CN]; TSAI FU HSIUNG [US]; LIN JINN-NAN [US]) 9 September 2005 (2005-09-09) * figure 1 * | 1-10 | INV. G01N27/327 |
| X | US 2007/205114 A1 (MATHUR VIJAYWANTH P [US]) 6 September 2007 (2007-09-06) | 1-5 | |
| Y | * the whole document * | 6-8 | |
| X | EP 1 691 192 A1 (MATSUSHITA ELECTRIC IND CO LTD [JP]) 16 August 2006 (2006-08-16) | 1-5 | |
| Y | * paragraphs [0042], [0043]; figure 1 * | 6-8 | |
| X | US 8 753 470 B2 (WANG YI [US]; ABBOTT DIABETES CARE INC [US]) 17 June 2014 (2014-06-17) | 1-5 | |
| Y | * column 7, line 35 - line 62; figures 1B,2B * | 6-8 | |
| Y | WO 2009/042631 A2 (BAYER HEALTHCARE LLC [US]; WU HUAN PING [US]; ZHONG WEIPING [US]; PERR) 2 April 2009 (2009-04-02) * paragraph [0064] * | 6-8 | TECHNICAL FIELDS SEARCHED (IPC) G01N |

~~The present search report has been drawn up for all claims~~

| Place of search | Date of completion of the search | Examiner |
|---|---|---|
| Munich | 12 February 2018 | Komenda, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 17 20 5790

The Search Division considers that the present European patent application does not comply with the requirements of unity of invention and relates to several inventions or groups of inventions, namely:

1. claims: 1-10

   A method of operation of a meter
   ---

2. claims: 11-15

   A test strip
   ---

## ANNEX TO THE EUROPEAN SEARCH REPORT
## ON EUROPEAN PATENT APPLICATION NO.

EP 17 20 5790

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2018

| Patent document cited in search report | | Publication date | Patent family member(s) | | Publication date |
|---|---|---|---|---|---|
| WO 2005083412 | A1 | 09-09-2005 | AT | 557273 T | 15-05-2012 |
| | | | CN | 1922478 A | 28-02-2007 |
| | | | EP | 1718961 A1 | 08-11-2006 |
| | | | ES | 2384050 T3 | 28-06-2012 |
| | | | US | 2005230252 A1 | 20-10-2005 |
| | | | WO | 2005083412 A1 | 09-09-2005 |
| US 2007205114 | A1 | 06-09-2007 | NONE | | |
| EP 1691192 | A1 | 16-08-2006 | CA | 2548440 A1 | 16-06-2005 |
| | | | CN | 1886651 A | 27-12-2006 |
| | | | EP | 1691192 A1 | 16-08-2006 |
| | | | EP | 2579031 A1 | 10-04-2013 |
| | | | EP | 3273232 A2 | 24-01-2018 |
| | | | JP | 4611208 B2 | 12-01-2011 |
| | | | JP | WO2005054840 A1 | 28-06-2007 |
| | | | KR | 20060133989 A | 27-12-2006 |
| | | | US | 2007131565 A1 | 14-06-2007 |
| | | | US | 2010270177 A1 | 28-10-2010 |
| | | | US | 2014158553 A1 | 12-06-2014 |
| | | | US | 2016077040 A1 | 17-03-2016 |
| | | | US | 2017292929 A1 | 12-10-2017 |
| | | | US | 2018128769 A1 | 10-05-2018 |
| | | | WO | 2005054840 A1 | 16-06-2005 |
| US 8753470 | B2 | 17-06-2014 | CA | 2674807 A1 | 03-07-2008 |
| | | | EP | 2125222 A1 | 02-12-2009 |
| | | | EP | 3248682 A1 | 29-11-2017 |
| | | | JP | 5483421 B2 | 07-05-2014 |
| | | | JP | 2010513931 A | 30-04-2010 |
| | | | TW | 200844435 A | 16-11-2008 |
| | | | US | D615884 S | 18-05-2010 |
| | | | US | 2008148873 A1 | 26-06-2008 |
| | | | US | 2009211344 A1 | 27-08-2009 |
| | | | US | 2012125767 A1 | 24-05-2012 |
| | | | US | 2012234487 A1 | 20-09-2012 |
| | | | US | 2014299467 A1 | 09-10-2014 |
| | | | US | 2015323488 A1 | 12-11-2015 |
| | | | US | 2017097316 A1 | 06-04-2017 |
| | | | WO | 2008079616 A1 | 03-07-2008 |
| WO 2009042631 | A2 | 02-04-2009 | BR | PI0817189 A2 | 17-03-2015 |
| | | | CA | 2700507 A1 | 02-04-2009 |
| | | | CA | 2899469 A1 | 02-04-2009 |
| | | | CA | 2984510 A1 | 02-04-2009 |
| | | | CN | 101849180 A | 29-09-2010 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 17 20 5790

This annex lists the patent family members relating to the patent documents cited in  the above-mentioned European search report.
The members are as contained in the European Patent Office EDP file on
The European Patent Office is in no way liable for these particulars which are merely given for the purpose of information.

12-02-2018

| Patent document cited in search report | Publication date | Patent family member(s) | | Publication date |
|---|---|---|---|---|
| | | CN | 107576707 A | 12-01-2018 |
| | | DK | 2205964 T3 | 28-09-2015 |
| | | EP | 2205964 A2 | 14-07-2010 |
| | | EP | 2535703 A1 | 19-12-2012 |
| | | EP | 2535704 A1 | 19-12-2012 |
| | | EP | 2535705 A1 | 19-12-2012 |
| | | EP | 2535706 A1 | 19-12-2012 |
| | | EP | 3193162 A1 | 19-07-2017 |
| | | ES | 2546777 T3 | 28-09-2015 |
| | | ES | 2547493 T3 | 06-10-2015 |
| | | ES | 2547574 T3 | 07-10-2015 |
| | | ES | 2636676 T3 | 06-10-2017 |
| | | HR | P20150979 T1 | 20-11-2015 |
| | | JP | 5523323 B2 | 18-06-2014 |
| | | JP | 5944934 B2 | 05-07-2016 |
| | | JP | 6150261 B2 | 21-06-2017 |
| | | JP | 6150262 B2 | 21-06-2017 |
| | | JP | 2010540934 A | 24-12-2010 |
| | | JP | 2014122911 A | 03-07-2014 |
| | | JP | 2016105092 A | 09-06-2016 |
| | | JP | 2016197113 A | 24-11-2016 |
| | | RU | 2010116159 A | 10-11-2011 |
| | | US | 2010267161 A1 | 21-10-2010 |
| | | US | 2018067071 A1 | 08-03-2018 |
| | | WO | 2009042631 A2 | 02-04-2009 |

EPO FORM P0459

For more details about this annex : see Official Journal of the European Patent Office, No. 12/82